# EUROPEAN PATENT APPLICATION

(11) **EP 3 951 954 A1**
(43) Date of publication of application: **09.02.2022**
(21) Application number: 20885146.9
(22) Date of filing: 02.11.2020
(51) Int. Cl.: H01M 4/62, H01M 4/38, H01M 4/36, H01M 4/13, H01M 10/052

(54) **BINDER FOR LITHIUM SECONDARY BATTERY ELECTRODE, LITHIUM SECONDARY BATTERY POSITIVE ELECTRODE COMPRISING SAME, AND LITHIUM SECONDARY BATTERY**

(30) Priority: 06.11.2019 KR 20190140727; 27.10.2020 KR 20200140343
(71) Applicant: LG ENERGY SOLUTION, LTD., Seoul 07335 (KR)
(72) Inventor: KIM, Bong Soo, Daejeon 34122 (KR); KIM, Taek Gyoung, Daejeon 34122 (KR); KIM, Soohyun, Daejeon 34122 (KR)
(74) Representative: Hoffmann Eitle
(86) International application number: PCT/KR2020/015108
(87) International publication number: WO 2021/091174

(57) **Abstract**

The present invention relates to a binder for an electrode of a lithium secondary battery, a positive electrode for a lithium secondary battery including the same, and a lithium secondary battery, more specifically, which comprises a small amount of a polymer including a carboxylate group and a cationic polymer that interacts electrostatically with the carboxylate group, thereby improving the bonding force of the electrode and thus improving the electrochemical reactivity and stability of the electrode and making possible to improve the stability, increase the capacity, and extend the lifetime of the lithium secondary battery comprising the electrode.

## Description

### [Technical Field]

This application claims the benefits of Korean Patent Application No. 10-2019-0140727 on November 06, 2019 with the Korean Intellectual Property Office, and Korean Patent Application No. 10-2020-0140343 on October 27, 2020 with the Korean Intellectual Property Office, the disclosure of which are herein incorporated by reference in their entirety.

The present invention relates to a binder for an electrode of a lithium secondary battery, a positive electrode for a lithium secondary battery including the same, and a lithium secondary battery.

### [Background Art]

As the utilization range of lithium secondary batteries is expanded not only to portable electronic devices and communication devices, but also to electric vehicles (EV) and electric storage systems (ESS), the demand for high capacity of lithium secondary batteries used as their power sources is increasing.

Among several lithium secondary batteries, the lithium-sulfur battery (Li-S battery) is a battery that uses sulfur as a positive electrode active material and lithium as a negative electrode active material. The lithium-sulfur battery has a theoretical discharging capacity of 1,675 mAh/g derived from a conversion reaction of lithium ion and sulfur (S₈+16Li++16e⁻ → 8Li₂S) in the positive electrode, and when lithium metal (theoretical capacity: 3,860 mAh/g) is used as the negative electrode, the theoretical energy density is 2,600 Wh/kg. Since the energy density of the lithium-sulfur battery is much higher than the theoretical energy density of other battery systems currently under study (Ni-MH battery: 450Wh/kg, Li-FeS battery: 480 Wh/kg, Li-MnO₂ battery: 1,000Wh/kg, Na-S battery: 800 Wh/kg) and commercial lithium secondary batteries (LiCoO₂/graphite), the lithium-sulfur battery is attracting attention as a high-capacity among secondary batteries that have been developed to date, and is a next-generation battery system to which several studies are being conducted.

Sulfur, which is used as a positive electrode active material in lithium-sulfur batteries, has an electrical conductivity of 5x10⁻³⁰ S/cm, which is a non-conductor, so it is difficult to move electrons generated by an electrochemical reaction. Accordingly, it is used in combination with a conductive material such as a porous carbon material capable of providing an electrochemical reaction site.

However, in the case of a lithium-sulfur battery, since lithium sulfide (Li₂S), the final reaction product generated by the reduction of sulfur, increases in volume compared to sulfur and changes the structure of the positive electrode, and lithium polysulfides (Li₂Sₓ, x=2~8), intermediate products of sulfur, is easily leached into the electrolyte, it is continuously leached during discharging, and thus the amount of positive electrode active material is reduced. As a result, as the degeneration of the positive electrode is accelerated and the capacity and lifetime characteristics of the battery are deteriorated, long-term stability of the battery cannot be secured.

As one of the solutions to these problems, a method of using a large amount of binder to increase the binding strength between porous carbon materials including sulfur has been proposed, but in this case, there is a problem that as the resistance increases due to the interference of electron transfer, the performance of the battery is deteriorated.

As another method, a method of using a lithium ion polymer as a binder or a method of using a material with an adsorption functional element to suppress the leaching of lithium polysulfide, an intermediate product has been proposed. Thus, when poly(acrylic acid) (PAA) or lithiated poly(acrylic acid) (LiPAA) was used as a binder, the bonding force of the electrode was increased and lithium ions could move smoothly. However, when a binder with high viscosity such as lithiated poly (acrylic acid) is used, there may be a problem in the dispersion of the slurry, and for this reason, when a dispersant is additionally applied, there is a concern that the bonding force of the electrode may be decreased.

Therefore, in order to improve the performance and stability of a lithium-sulfur battery, it is still necessary to develop an optimization method capable of securing an excellent bonding force of an electrode.

### [Prior Art Document]

### [Patent Document]

Korean Patent Publication No. 2019-0078882, BINDER FOR LITHIUM-SULFUR BATTERY, POSITIVE ELECTRODE AND LITHIUM-SULFUR BATTERY COMPRISING THE SAME

### [Disclosure]

### [Technical Problem]

In order to solve the above problems, the inventors of the present invention have conducted various studies, and as a result, have confirmed that when a cationic polymer that interacts electrostatically with the carboxylate group is added to the binder for the electrode of the lithium secondary battery, as the adhesive properties of the electrode are improved, the electrochemical reactivity and stability of the electrode are improved, so that excellent performance of the battery can be realized, and thus have completed the present invention.

Accordingly, it is an object of the present invention to provide a binder for an electrode of a lithium secondary battery, which improves the bonding force of the electrode.

In addition, it is another object of the present invention to provide a positive electrode for a lithium secondary battery comprising the binder as mentioned above.

In addition, it is still another object of the present invention to provide a lithium secondary battery comprising the positive electrode as mentioned above.

### [Technical Solution]

In order to achieve the above objects, the present invention provides a binder comprising a polymer including a carboxylate group and a cationic polymer, wherein the content of the cationic polymer is 5 % by weight to 30 % by weight based on a total weight of the binder for the electrode of the lithium secondary battery.

The polymer including the carboxylate group may comprise at least one selected from the group consisting of poly(acrylic acid), lithium polyacrylate, poly(methacrylic acid), lithium poly(methacrylate), carboxymethyl cellulose, sodium carboxymethyl cellulose, styrene-butadiene rubber/carboxymethyl cellulose, alginic acid, and sodium alginate.

The polymer including the carboxylate group may have a weight average molecular weight of 50,000 to 5,000,000.

The cationic polymer may comprise at least one selected from the group consisting of polyquaternium, poly(allylamine hydrochloride), poly(ethylene imine), poly(4-vinylpyridine), poly(3,4-ethylenedioxythiophene) :poly(styrenesulfonate), poly(vinylamine hydrochloride), poly(2-(dimethylamino)ethyl methacrylate)), and poly(amido amine).

The cationic polymer may have a weight average molecular weight of 3,000 to 1,000,000.

The polymer including the carboxylate group and the cationic polymer may be included in a weight ratio of 70:30 to 95:5.

In addition, the present invention provides a positive electrode for a lithium secondary battery comprising the binder.

In addition, the present invention provides a lithium secondary battery comprising the positive electrode.

### [Advantageous Effects]

The binder for the electrode of the lithium secondary battery according to the present invention includes a small amount of cationic polymer that interacts electrostatically with the carboxylate group, thereby improving the bonding force of the electrode and thus improving the electrochemical reactivity and stability of the electrode comprising it. Accordingly, it is possible to improve the stability, increase the capacity, and extend the lifetime of the lithium secondary battery comprising the electrode.

### [Description of Drawings]

FIG. 1 is a graph showing evaluation results of bonding forces of positive electrodes of Examples 1 to 3 and Comparative Example 1 according to Experimental Example 1 of the present invention.
FIG. 2 is a graph showing evaluation results of bonding forces of positive electrodes of Examples 4 to 6 and Comparative Example 2 according to Experimental Example 1 of the present invention.
FIG. 3 is a graph showing evaluation results of bonding forces of positive electrodes of Examples 7 to 9 and Comparative Example 3 according to Experimental Example 1 of the present invention.
FIG. 4 is a graph showing evaluation results of bonding forces of positive electrodes of Examples 8 and 10 and Comparative Examples 3 and 4 according to Experimental Example 1 of the present invention.
FIG. 5 is a graph showing evaluation results of bonding forces of positive electrodes of Example 11 and Comparative Example 3 according to Experimental Example 1 of the present invention.
FIG. 6 is a graph showing evaluation results of lifetime characteristics of lithium secondary batteries of Example 12, Example 13, and Comparative Example 5 according to Experimental Example 2 of the present invention.
FIG. 7 is a graph showing evaluation results of lifetime characteristics of lithium secondary batteries of Example 14 and Comparative Example 5 according to Experimental Example 2 of the present invention.

### [Best Mode]

Hereinafter, the present invention will be described in more detail.

The terms and words used in the present specification and claims should not be construed as limited to ordinary or dictionary terms, and should be construed in a sense and concept consistent with the technical idea of the present invention, based on the principle that the inventor can properly define the concept of a term to describe his invention in the best way possible.

The terminology used herein is for the purpose of describing particular embodiments only and is not intended to be limiting of the present invention. The singular forms "a," "an" and "the" comprise plural referents unless the context clearly dictates otherwise. It is to be understood that the terms "comprise", or "have", etc., as used in the present specification, are intended to designate the presence of stated features, numbers, steps, operations, components, parts or combinations thereof, but not to preclude the possibility of the presence or addition of one or more other features, numbers, steps, operations, components, parts, or combinations thereof.

The term "polysulfide" used in the present invention has a concept including both "polysulfide ion (Sₓ²⁻, x = 8, 6, 4, 2)" and "lithium polysulfide (Li₂Sₓ or LiSₓ⁻, x = 8, 6, 4, 2)".

The lithium-sulfur battery has higher theoretical discharging capacity and theoretical energy density than other various secondary batteries, and is attracting attention as a next-generation secondary battery due to the advantage that sulfur, which is used as a positive electrode active material, is rich in resources and is cheap and environmentally friendly.

Sulfur, which is used as a positive electrode active material in the lithium-sulfur battery is a non-conductor, and therefore, in order to realize the electrochemical activity of sulfur without electrical conductivity, a sulfur-carbon composite mixed with a porous carbon material having a large specific surface area is generally used.

However, sulfur finally changes to lithium sulfide during discharging, resulting in a volume expansion of about 80%, and thus resulting in deformation of the structure of the positive electrode, and also among lithium polysulfides which are intermediate products of the discharging reaction, lithium polysulfides (Li₂Sₓ, usually x > 4), which have the high oxidation number of sulfur, are substances with a strong polarity, and are easily dissolved in the electrolyte comprising a hydrophilic organic solvent and thus released outside the reaction zone of the positive electrode, thereby no longer participating in the electrochemical reaction and thus resulting in the loss of sulfur.

In order to solve these problems, in the prior art, several methods have been proposed, such as a method of increasing the content of a binder or a method of using a functionalized binder, to increase the bonding force of the electrode, specifically the binding strength between the positive electrode active materials and the adhesion force of the positive electrode active materials to the current collector. However, there is a problem that the increase in the content of the binder increases the resistance of the positive electrode and interferes with the electron pass, thereby reducing the performance and lifetime of the battery. On the other hand, if the type of binder is different, there is a problem that the dispersibility of the slurry containing the binder is lowered, and thus the bonding force of the electrode is rather deteriorated.

Therefore, the present invention improves the problem of deteriorating the electrochemical reactivity and stability of the positive electrode by using two types of specific polymers that bond to each other through electrical interaction as a binder and thus increasing the bonding force of the electrode, especially the positive electrode, and thus improves the performance of the battery including the same.

Specifically, the binder for the electrode of the lithium secondary battery according to the present invention comprises a polymer including a carboxylate group and a cationic polymer, wherein the cationic polymer is included in an amount of 5 % by weight to 30 % by weight based on a total weight of the binder for the electrode of the lithium secondary battery.

The two types of polymers included in the binder of the present invention are also used in the prior art, but in the present invention, it is characterized in that it is intended to improve the bonding force of the electrode through electrostatic interaction that occurs between the two types of polymers having different polarities, and in particular, the cationic polymer that induces electrostatic interaction with the carboxylate group-containing polymer with a negative charge is comprised in a small amount as an additive.

In the present invention, the polymer including the carboxylate group compises an anionic carboxylate (-C(=O)O-) structure in the molecule. At this time, the carboxylate group comprises those in the neutral form of carboxylic acid (-C(=O)OH) .

The polymer including the carboxylate group serves as a main binder that binds between components comprising an electrode, specifically between a positive electrode active material and a positive electrode active material, and between a positive electrode active material and a positive electrode current collector. Since the polymer including the carboxylate group not only has excellent mechanical strength, but also exhibits a negative charge, it facilitates the movement of positively charged lithium ions, and can increase the bonding force of the electrode through electrostatic mutual bonding with the cationic polymer to be described later. In addition, since the polymer including the carboxylate group interacts with a cation, it also has a function of adsorbing a cation, polysulfide.

The polymer including the carboxylate group may be exemplified by a homopolymer comprising a monomer including a carboxylate group, a block copolymer comprising a monomer including a carboxylate group, and a mixture thereof.

For example, the polymer including the carboxylate group may comprises at least one selected from the group consisting of poly(acrylic acid) (PAA), lithium polyacrylate (LiPAA), poly(methacrylic acid) (PMA), lithium poly(methacrylate) (LiPMA), carboxymethyl cellulose(CMC), sodium carboxymethyl cellulose, styrene-butadiene rubber/carboxymethyl cellulose(SBR/CMC), alginic acid and sodium alginate. Preferably, the polymer including the carboxylate group may be at least one selected from the group consisting of poly(acrylic acid), sodium alginate, and carboxymethyl cellulose, and more preferably, the polymer including the carboxylate group may be poly(acrylic acid).

The weight average molecular weight (M_{w}) of the polymer containing the carboxylate group may be 50,000 to 5,000,000, preferably 100,000 to 2,000,000. When the weight average molecular weight of the polymer including the carboxylate group is less than the above range, the adhesive property of the electrode may be reduced, and the dispersion stability of the slurry may be deteriorated. On the contrary, when the weight average molecular weight of the polymer including the carboxylate group exceeds the above range, since it has an excessively large viscosity, the preparing process of the slurry becomes difficult and the initial dispersion of particles in the slurry is difficult.

The polymer including the carboxylate group may be included in an amount of 70 % by weight to 95 % by weight, preferably 75 % by weight to 95 % by weight, more preferably 80 % by weight to 95 % by weight based on a total weight of the binder for the electrode of the lithium secondary battery. When the content of the polymer including the carboxylate group is less than the above range, since the amount of the main binder material is insufficient, the bonding effect between the components constituting the electrode is reduced. On the contrary, when the content of the polymer including the carboxylate group exceeds the above range, since the content of the cationic polymer to be described later is relatively reduced, the effect of improving the bonding force does not exhibit. Therefore, it is desirable to determine an appropriate content within the above range. However, the specific optimal content of the polymer including the carboxylate group may be set differently depending on the positive electrode to be provided and other characteristics and service environment of the battery having the same, and it does not mean that this practical use is limited by the above-described scope.

In the present invention, the cationic polymer comprises an ionic functional group having a positive charge and is applied as an additive to the binder for the electrode of the lithium secondary battery of the present invention and electrostatically interacts with the polymer including the carboxylate group used as the main binder, thereby serving to maintain the positive electrode active materials in the positive electrode current collector, organically connect between the positive electrode active materials, thereby further improving the binding strength between them. Specifically, as described above, since the polymer including the carboxylate group exhibits a negative charge and thus is bonded with the cationic polymer having a positive charge to each other by interacting with each other due to attractive forces, even if the total amount of the binder is reduced, the amount of the binder used can be minimized to improve the energy density of the battery as compared to the conventional binder, and the capacity, lifetime and reliability of the battery can be improved by preventing the detachment of the electrode active material.

The cationic polymer may comprise a polymer including a cationic functional group and a polymer including an anionic functional group paired with it, or may be comprise a cationic polymer including quaternary ammonium having a positive charge and a monoatomic anion that is a counter ion thereof.

For example, the cationic polymer may comprise at least one selected from the group consisting of polyquaterniums such as poly(diallyldimethylammonium chloride) (polyquaternium-6), and poly[(2-ethyldimethylammonioethyl methacrylate ethyl sulfate)-co-(1-vinylpyrrolidone)](polyquaternium-d11), poly(allylamine hydrochloride)(PAH), poly(ethylene imine)(PEI), poly(4-vinylpyridine)(P4VP), poly(3,4-ethylenedioxythiophene):poly(styrenesulfonate)(PEDOT:PSS), poly(vinylamine hydrochloride), poly(2-(dimethylamino)ethyl methacrylate)) and poly(amido amine). Preferably, the cationic polymer may be at least one selected from the group consisting of poly(diallyldimethylammonium chloride), poly[(2-ethyldimethylammonioethyl methacrylate ethyl sulfate)-co-(1-vinylpyrrolidone)] and poly(3,4-ethylenedioxythiophene):poly(styrenesulfonate), and more preferably, the cationic polymer may be at least one selected from the group consisting of poly(diallyldimethylammonium chloride) and poly(3,4-ethylenedioxythiophene):poly(styrenesulfonate) .

The weight average molecular weight (M_{w}) of the cationic polymer may be 3,000 to 1,000,000, preferably 5,000 to 500, 000. When the weight average molecular weight of the cationic polymer is less than the above range, the effect of improving the bonding force of the electrode may be insignificant. On the contrary, when the weight average molecular weight of the cationic polymer exceeds the above range, the resistance of the electrode may be increased and the performance of the battery comprising the same may be decreased.

The cationic polymer may be included in an amount of 5 % by weight to 30 % by weight, preferably 5 % by weight to 25 % by weight, and more preferably 5 % by weight to 20 % by weight based on a total weight of the binder for the electrode of the lithium secondary battery. Unlike the prior art containing the cationic polymer in an amount of 30 % by weight to 70 % by weight based on a total weight of the binder to improve the lithium ion conductivity in the electrode, in the case of the present invention, the performance of the battery such as capacity retention according to the charging/discharging lifetime can be improved by adding a small amount of the cationic polymer in the above-described range in order to improve the adhesive property of the electrode, and thus securing an excellent bonding force of the electrode. When the content of the cationic polymer is less than the above range, the effect of improving the binding strength of the electrode is decreased. On the contrary, when the content of the cationic polymer exceeds the above range, the bonding force may be decreased as the content of the main binder is relatively reduced. Therefore, it is desirable to determine an appropriate content within the above range. However, the specific optimal content of the cationic polymer may be set differently depending on the electrode to be provided and other characteristics and service environment of the battery having the same, and it does not mean that this practical use is limited by the above-described scope.

In addition, in the present invention, the weight ratio of the polymer including the carboxylate group and the cationic polymer (the polymer containing the carboxylate group: the cationic polymer) may be 70:30 to 95:5, preferably 75:25 to 95:5, more preferably, 80:20 to 95:5. When the ratio of the cationic polymer is higher than the weight ratio range, the content of the main binder is relatively reduced, and the physical properties of the manufactured electrode are deteriorated, so that the electrode active material and the electrically conductive material can be easily detached. On the other hand, when the ratio of the cationic polymer is lower than the weight ratio range, since the effect of improving the bonding force of the electrode disappears, the advantage of mixing the cationic polymer disappears.

In addition, the present invention provides a positive electrode for a lithium secondary battery comprising the binder for the electrode of the lithium secondary battery.

The positive electrode for the lithium secondary battery may comprise a positive electrode current collector and a positive electrode active material layer formed on one or both sides of the positive electrode current collector, and the positive electrode active material layer may comprise a positive electrode active material, a conductive material, and the binder for the electrode of the lithium secondary battery as described above.

The current collector supports the positive electrode active material and is not particularly limited as long as it has high electrical conductivity without causing chemical changes in the battery. For example, copper, stainless steel, aluminum, nickel, titanium, palladium, sintered carbon; copper or stainless steel surface-treated with carbon, nickel, silver or the like; aluminum-cadmium alloy or the like may be used as the current collector.

The current collector can enhance the bonding force with the positive electrode active material by having fine irregularities on its surface, and may be formed in various forms such as film, sheet, foil, mesh, net, porous body, foam, or nonwoven fabric.

The positive electrode active material may comprise at least one selected from the group consisting of elemental sulfur (S₈) and sulfur-based compounds. The sulfur-based compound may comprise at least one selected from the group consisting of Li₂Sₙ (n≥1), disulfide compounds, organosulfur compounds and carbon-sulfur polymers ((C₂Sₓ)ₙ, x=2.5 to 50, n≥2). Preferably, the positive electrode active material may be elemental sulfur.

The sulfur-based compound is used in combination with an electrically conductive material because it does not have electrical conductivity alone. Preferably, the positive electrode active material may be a sulfur-carbon composite.

The carbon in the sulfur-carbon composite is a porous carbon material and provides a framework capable of uniformly and stably immobilizing sulfur, which is a positive electrode active material, and supplements the electrical conductivity of sulfur to enable the electrochemical reaction to proceed smoothly.

The porous carbon material can be generally produced by carbonizing precursors of various carbon materials. The porous carbon material may comprise uneven pores therein, the average diameter of the pores is in the range of 1 to 200 nm, and the porosity may be in the range of 10 to 90% of the total volume of the porosity. If the average diameter of the pores is less than the above range, the pore size is only at the molecular level and impregnation with sulfur is impossible. On the contrary, if the average diameter of the pores exceeds the above range, the mechanical strength of the porous carbon is weakened, which is not preferable for application to the manufacturing process of the electrode.

The shape of the porous carbon material is in the form of sphere, rod, needle, plate, tube, or bulk, and can be used without limitation as long as it is commonly used in a lithium-sulfur battery.

The porous carbon material may have a porous structure or a high specific surface area, and may be any of those conventionally used in the art. For example, the porous carbon material may be, but is not limited to, at least one selected from the group consisting of graphite; graphene; carbon blacks such as Denka black, acetylene black, Ketjen black, channel black, furnace black, lamp black, and thermal black; carbon nanotubes (CNTs) such as single wall carbon nanotube (SWCNT) and multiwall carbon nanotubes (MWCNT); carbon fibers such as graphite nanofiber (GNF), carbon nanofiber (CNF), and activated carbon fiber (ACF); and natural graphite, artificial graphite, expanded graphite, and activated carbon.

The sulfur-carbon composite may contain sulfur in an amount of 60 parts by weight to 90 parts by weight, preferably 65 parts by weight to 85 parts by weight, more preferably 70 parts by weight to 80 parts by weight based on 100 parts by weight of the sulfur-carbon composite. When the content of the sulfur is less than the above-mentioned range, as the content of the porous carbon material in the sulfur-carbon composite is relatively increased, the specific surface area is increased, so that the content of the binder is increased when preparing the positive electrode. Increasing the amount of use of the binder may eventually increase the sheet resistance of the positive electrode and acts as an insulator preventing electron pass, thereby deteriorating the performance of the battery. On the contrary, when the content of the sulfur exceeds the above-mentioned range, as the sulfur or sulfur compounds that are not combined with the porous carbon material are aggregated with each other or re-leached to the surface of the porous carbon material, it is difficult to receive electrons and thus cannot participate in the electrochemical reaction, resulting in capacity loss of the battery.

In addition, the sulfur in the sulfur-carbon composite is located on at least one of the inner and outer surfaces of the aforementioned porous carbon material, and at this time, may exist in less than 100 %, preferably 1 % to 95%, more preferably 60 % to 90% of the region of the entire inner and outer surfaces of the porous carbon material. When the sulfur is present on the inner and outer surfaces of the porous carbon material within the above range, it can show maximum effect in terms of electron transfer area and wettability with electrolyte. Specifically, since the sulfur is thinly and evenly impregnated on the inner and outer surfaces of the porous carbon material in the above range, it is possible to increase the electron transfer contact area in the charging/discharging process. When the sulfur is located in 100 % of the region of the entire inner and outer surfaces of the porous carbon material, the carbon material is completely covered with sulfur and thus has poor wettability to the electrolyte and its contact with the electrically conductive material contained in the electrode is reduced, so that it cannot receive electrons and thus cannot participate in the electrochemical reaction.

The positive electrode active material may further comprise at least one additive selected from a transition metal element, a group IIIA element, a group IVA element, a sulfur compound of these elements, and an alloy of these elements and sulfur, in addition to the above-described components.

The transition metal element may comprise Sc, Ti, V, Cr, Mn, Fe, Co, Ni, Cu, Zn, Y, Zr, Nb, Mo, Tc, Ru, Rh, Pd, Os, Ir, Pt, Au, Hg and the like, and the group IIIA element may comprise Al, Ga, In, Ti and the like, and the group IVA element may comprise Ge, Sn, Pb, and the like.

The positive electrode active material may be included in an amount of 50 % by weight to 95 % by weight, preferably 70 % by weight to 90 % by weight, and more preferably 85 % by weight to 90 % by weight based on a total weight of the base solid content included in the positive electrode for the lithium secondary battery. When the content of the electrode active material is less than the above range, the electrochemical reaction of the electrode is difficult to be sufficiently exerted. On the contrary, when the content of the electrode active material exceeds the above range, there is a problem that since the content of the electrically conductive material and the binder described later is relatively insufficient, the resistance of the electrode is increased and the physical property of the electrode is deteriorated.

The positive electrode for a lithium secondary battery of the present invention contains a conductive material to allow electrons to move smoothly within the positive electrode. The conductive material is a material that serves as a path for electrons to move from the current collector to the positive electrode active material by electrically connecting the electrolyte and the positive electrode active material and can be used without limitation as long as it has electrical conductivity.

For example, as the conductive material, carbon blacks such as Super-P, Denka black, acetylene black, Ketjen black, channel black, furnace black, lamp black, thermal black, and carbon black; carbon derivatives such as carbon nanotube or fullerene; electrically conductive fibers such as carbon fiber or metal fiber; carbon fluoride, aluminum, and metal powders such as nickel powder; and electrically conductive polymers such as polyaniline, polythiophene, polyacetylene, and polypyrrole may be used alone or in combination.

The conductive material may be included in an amount of 0 % by weight to 10 % by weight, preferably 3 % by weight to 5 % by weight based on a total weight of the base solid content included in the positive electrode for the lithium secondary battery. When the content of the electrically conductive material is less than the above range, it is not easy to transfer electrons between the positive electrode active material and the current collector, so the voltage and capacity can be reduced. On the contrary, when the content of the electrically conductive material exceeds the above range, the proportion of the positive electrode active material is relatively reduced, so that the total energy (quantity of electric charge) of the cell can be reduced. Therefore, it is desirable to determine an appropriate content within the above-described range.

The positive electrode for the lithium secondary battery of the present invention includes a binder to further increase the binding strength between the components comprising the positive electrode and between them and the current collector. The binder comprises the binder for the electrode of the lithium secondary battery according to the present invention as described above.

The binder may be included in an amount of 2 % by weight to 10 % by weight, preferably 3 % by weight to 8 % by weight, and more preferably 4 % by weight to 7 % by weight based on a total weight of the base solid content included in the positive electrode for the lithium secondary battery. When the content of the binder is less than the above range, the physical property of the positive electrode is deteriorated, so the positive electrode active material and the electrically conductive material may be detached. When the content of the binder exceeds the above range, the ratio of the positive electrode active material and the electrically conductive material in the positive electrode is relatively reduced, so the capacity of the battery can be reduced. Therefore, it is desirable to determine an appropriate content within the above-described range.

In addition, the binder is according to the present invention, and comprises a polymer including a carboxylate group and a cationic polymer. At this time, the content of the cationic polymer may be 0.1 % by weight to 3 % by weight, preferably 0.2 % by weight to 2 % by weight, more preferably 0.5 % by weight to 1.5 % by weight based on a total weight of the slurry composition for the positive electrode of the lithium secondary battery. When the content of the cationic polymer is out of the above-described range, there may be a problem that the resistance increases along with the decrease in the bonding force of the electrode.

In addition to the binder of the present invention, a known binder generally used in the relevant technical field may be additionally used. An exemplary additional binder may be fluororesin-based binders comprising polyvinylidene fluoride (PVdF) or polytetrafluoroethylene (PTFE); rubber-based binders comprising styrene-butadiene rubber (SBR), acrylonitrile-butadiene rubber, and styrene-isoprene rubber; polyalcohol-based binders; polyolefin-based binders comprising polyethylene and polypropylene; polyimide-based binders, polyester-based binders; and silane-based binders, or mixtures or copolymers of two or more thereof.

In addition, the positive electrode active material layer may further, if necessary, comprise a component commonly used for the purpose of improving its function in the relevant technical field, in addition to the above-described components. The additionally applicable components may be a viscosity modifier, a fluidizing agent, a filler, a crosslinking agent, a dispersing agent, and the like.

The positive electrode for the lithium secondary battery may be manufactured by a method known in the art. For example, the positive electrode may be prepared by mixing and stirring a binder, a conductive material, a solvent, if necessary, additives such as a filler in a positive electrode active material to prepare a slurry, then applying (coating) the slurry to a current collector of a metal material, compressing and drying it.

For example, first, the binder is dissolved in the solvent for preparing the slurry, and then the conductive material is dispersed. As a solvent for preparing the slurry, it is preferable to use a solvent that can uniformly disperse the positive electrode active material, the binder, and the conductive material and can be easily evaporated.

For example, the solvent may be selected from an organic solvent such as N-methyl-2-pyrrolidone, propylene carbonate, ethylene carbonate, butylene carbonate, dimethyl carbonate, diethyl carbonate, gamma-butyrolactone, 1,2-dimethoxyethane, tetrahydrofuran, 2-methyl tetrahydrofuran, dimethylsulfoxide, formamide, dimethylformamide, acetonitrile, nitromethane, methyl formate, methyl acetate, phosphate triester, trimethoxymethane, sulfolane, methyl sulfolane, 1,3-dimethyl-2-imidazolidinone, propylene carbonate derivatives, tetrahydrofuran derivatives, methyl propionate or ethyl propionate; an aqueous solvent such as water; and a mixture thereof. Among them, if the aqueous solvent such as water is used, it may be advantageous in terms of drying temperature and environmental aspects.

Next, the positive electrode active material, optionally together with an additive, is uniformly dispersed again in a solvent, in which the binder and the conductive material are dispersed, to prepare the slurry for the positive electrode.

The slurry thus prepared is applied to the current collector and dried to form a positive electrode. The slurry may be applied to the current collector with an appropriate thickness depending on the viscosity of the slurry and the thickness of the positive electrode to be formed.

At this time, the application method is not particularly limited. For example, a method such as a doctor blade method, a die casting method, a comma coating method, and a screen printing method may be mentioned. At this time, the amount of the slurry composition for the positive electrode for the lithium secondary battery to be applied is also not particularly limited, but is usually used in such an amount that the thickness of the positive electrode active material layer which is formed after drying and removing the solvent and consists of the positive electrode active material, the electrically conductive material, the binder and the like is usually 0.005 mm to 5 mm, preferably 0.01 mm to 2 mm.

The drying is for removing the solvent, and is performed under conditions such as temperature and time to sufficiently remove the solvent. The conditions are not particularly limited in the present invention because they may vary depending on the type of solvent. The drying method is not particularly limited, and examples thereof may comprise a drying method using warm air, hot air, and low humid air, a vacuum drying method, and a drying method by irradiation of (far) infrared rays, electron rays and the like. The drying rate is usually adjusted so that the solvent can be removed as quickly as possible within the range of speed that does not cause cracks in the positive electrode active material layer due to stress concentration and does not separate the positive electrode active material layer from the current collector.

Additionally, the density of the positive electrode active material in the positive electrode may be increased by pressing the current collector after drying. Methods, such as a mold press and a roll press, may be mentioned as a press method.

In addition, the present invention provides a lithium secondary battery comprising the positive electrode.

The lithium secondary battery comprises a positive electrode and a negative electrode, and a separator and electrolyte interposed therebetween, wherein the positive electrode comprises a positive electrode for a lithium secondary battery according to the present invention.

The positive electrode is as described above.

The negative electrode may comprise a negative electrode current collector and a negative electrode active material layer coated on one or both surfaces of the negative electrode current collector. Alternatively, the negative electrode may be a lithium metal plate.

The negative electrode current collector is for supporting the negative electrode active material, as described in the positive electrode.

The negative electrode active material layer may comprise an electrically conductive material, a binder, etc. in addition to the negative electrode active material. At this time, the electrically conductive material and the binder are as described above.

The negative electrode active material may comprise a material capable of reversibly intercalating or deintercalating lithium ion (Li⁺), a material capable of reacting with lithium ion to reversibly form lithium containing compounds, lithium metal, or lithium alloy.

The material capable of reversibly intercalating or deintercalating lithium ion (Li⁺) can be, for example, crystalline carbon, amorphous carbon, or a mixture thereof. The material capable of reacting with lithium ion (Li⁺) to reversibly form lithium containing compounds may be, for example, tin oxide, titanium nitrate, or silicon. The lithium alloy may be, for example, an alloy of lithium (Li) and a metal selected from the group consisting of sodium (Na), potassium (K), rubidium (Rb), cesium (Cs), francium (Fr), beryllium (Be), magnesium (Mg), calcium (Ca), strontium (Sr), barium (Ba), radium (Ra), aluminum (Al), and tin (Sn).

Preferably, the negative electrode active material may be lithium metal, and specifically, may be in the form of a lithium metal thin film or lithium metal powder.

A separator may be comprised between the positive electrode and the negative electrode.

The separator enables the lithium ion to be transported between the positive electrode and the negative electrode while separating or insulating the positive electrode and the negative electrode from each other. Such separator may be made of a porous non-conductive or insulating material, and may be used without particular limitation as long as it is commonly used as a separator in a lithium secondary battery. The separator may be an independent member such as a film, or may be a coating layer added to the positive and/or negative electrodes.

It is desirable to use a separator having excellent wettability to the electrolyte while having low resistance to ion migration of the electrolyte.

The separator may be made of a porous substrate, and the porous substrate can be used as long as it is a porous substrate commonly used for a secondary battery. The porous substrate may be a porous polymer film alone or a laminate of porous polymer films, and for example, may be a non-woven fabric made of glass fiber or polyethylene terephthalate fiber with high melting point, etc., or a polyolefin-based porous film, but is not limited thereto.

The material of the porous substrate is not particularly limited in the present invention, and any material can be used as long as it is a porous substrate commonly used in an electrochemical device. For example, the porous substrate may comprise one or more materials selected from the group consisting of polyolefins such as polyethylene and polypropylene, polyesters such as polyethylene terephthalate and polybutylene terephthalate, polyamide, polyacetal, polycarbonate, polyimide, polyetherether ketone, polyethersulfone, polyphenylene oxide, polyphenylenesulfide, polyethylene naphthalene, polytetrafluoroethylene, polyvinylidene fluoride, polyvinylchloride, polyacrylonitrile, cellulose, nylon, poly(p-phenylene benzobisoxazole), and polyarylate.

The thickness of the porous substrate is not particularly limited, but may be 1 *µ*m to 100 *µ*m, preferably 5 *µ*m to 50 *µ*m. Although the thickness range of the porous substrate is not limited to the above-described range, when the thickness is too thin than the above-described lower limit, mechanical properties are deteriorated and the separator may be easily damaged during use of the battery.

The average diameter and porosity of the pores present in the porous substrate are also not particularly limited, but may be 0.001 *µ*m to 50 *µ*m and 10 % to 95 %, respectively.

The electrolyte comprises lithium ions and is used for causing an electrochemical oxidation or reduction reaction in a positive electrode and a negative electrode through these.

The electrolyte may be a non-aqueous electrolyte solution or a solid electrolyte which does not react with lithium metal, but is preferably a non-aqueous electrolyte, and comprises an electrolyte salt and an organic solvent.

The electrolytic salt which is comprised in the non-aqueous electrolyte is lithium salt. The lithium salt can be used without limitation as long as it is commonly used in an electrolyte solution for a lithium secondary battery. For example, the lithium salt may be LiCl, LiBr, LiI, LiClO₄, LiBF₄, LiB₁₀Cl₁₀, LiPF₆, LiCF₃SO₃, LiCF₃CO₂, LiAsF₆, LiSbF₆, LiAlCl₄, CH₃SO₃Li, (CF₃SO₂)₂NLi, LiN(SO₂F)₂, lithium chloroborane, lithium lower aliphatic carboxylate, 4-phenyl lithium borate, lithium imide, etc.

The concentration of the lithium salt may be 0.2 M to 2 M, preferably 0.4 M to 2 M, more preferably 0.4 M to 1.7 M depending on various factors such as the exact composition of the electrolyte solvent mixture, the solubility of the salt, the conductivity of the dissolved salt, the charging and discharging conditions of the battery, the operating temperature, and other factors known in the lithium battery field. When the concentration of the lithium salt is less than 0.2 M, the conductivity of the electrolyte may be lowered and thus the performance of the electrolyte may be deteriorated. When the concentration of the lithium salt is more than 2 M, the viscosity of the electrolyte may increase and thus the mobility of the lithium ion may be reduced.

As the organic solvent contained in the non-aqueous electrolyte solution, those conventionally used in an electrolyte solution for a lithium secondary battery may be used without limitation, and for example, ether, ester, amide, linear carbonate, cyclic carbonate, etc. may be used alone or in combination of two or more. Among them, representatively, ether-based compounds may be comprised.

The ether-based compound may comprise acyclic ethers and cyclic ethers.

For example, the acyclic ether may be, but is not limited to, at least one selected from the group consisting of dimethyl ether, diethyl ether, dipropyl ether, methylethyl ether, methylpropyl ether, ethylpropyl ether, dimethoxyethane, diethoxyethane, ethylene glycol ethylmethyl ether, diethylene glycol dimethyl ether, diethylene glycol diethyl ether, diethylene glycol methylethyl ether, triethylene glycol dimethyl ether, triethylene glycol diethyl ether, triethylene glycol methylethyl ether, tetraethylene glycol dimethyl ether, tetraethylene glycol diethyl ether, tetraethylene glycol methylethyl ether, polyethylene glycol dimethyl ether, polyethylene glycol diethyl ether, and polyethylene glycol methylethyl ether.

For example, the cyclic ether may be, but is not limited to, at least one selected from the group consisting of 1,3-dioxolane, 4,5-dimethyl-dioxolane, 4,5-diethyl-dioxolane, 4-methyl-1,3-dioxolane, 4-ethyl-1,3-dioxolane, tetrahydrofuran, 2-methyltetrahydrofuran, 2,5-dimethyltetrahydrofuran, 2,5-dimethoxytetrahydrofuran, 2-ethoxytetrahydrofuran, 2-methyl-1,3-dioxolane, 2-vinyl-1,3-dioxolane, 2,2-dimethyl-1,3-dioxolane, 2-methoxy-1,3-dioxolane, 2-ethyl-2-methyl-1,3-dioxolane, tetrahydropyran, 1,4-dioxane, 1,2-dimethoxy benzene, 1,3-dimethoxy benzene, 1,4-dimethoxy benzene, and isosorbide dimethyl ether.

Examples of the ester of the organic solvent may comprise, but is not limited to, at least one selected from the group consisting of methyl acetate, ethyl acetate, propyl acetate, methyl propionate, ethyl propionate, propyl propionate, γ-butyrolactone, γ-valerolactone, γ-caprolactone, o-valerolactone, and ε-caprolactone, or a mixture of two or more thereof.

Specific examples of the linear carbonate compound may representatively comprise, but is not limited to, at least one selected from the group consisting of dimethyl carbonate (DMC), diethyl carbonate (DEC), dipropyl carbonate, ethylmethyl carbonate (EMC), methylpropyl carbonate, and ethylpropyl carbonate, or a mixture of two or more thereof.

In addition, specific examples of the cyclic carbonate compound may comprise at least one selected from the group consisting of ethylene carbonate (EC), propylene carbonate (PC), 1,2-butylene carbonate, 2,3-butylene carbonate, 1,2-pentylene carbonate, 2,3-pentylene carbonate, vinylene carbonate, vinylethylene carbonate, and halides thereof, or a mixture of two or more thereof. Examples of such halides may be, but are not limited to, fluoroethylene carbonate (FEC) and the like.

The injection of the nonaqueous electrolyte solution may be performed at an appropriate stage of the manufacturing processes of the electrochemical device, depending on the manufacturing process and required properties of the final product. That is, the injection can be performed before assembling the electrochemical device or at the final stage of assembling the electrochemical device.

The lithium secondary battery according to the present invention can be manufactured by lamination, stacking, and folding processes of the separator and the electrodes, in addition to the usual winding process.

The shape of the lithium secondary battery is not particularly limited, and may be various shapes such as a cylindrical shape, a laminate shape, and a coin shape.

Also, the present invention provides a battery module comprising the lithium secondary battery described above as a unit battery.

The battery module may be used as a power source for medium to large-sized devices requiring high temperature stability, long cycle characteristics, high capacity characteristics, and the like.

Examples of such medium to large-sized devices may comprise, but is not limited to, a power tool powered and moved by an electric motor; an electric car including an electric vehicle (EV), a hybrid electric vehicle (HEV), a plug-in hybrid electric vehicle (PHEV), and the like; an electric motorcycle including an electric bike (E-bike) and an electric scooter (E-scooter); an electric golf cart; a power storage system, etc.

Hereinafter, preferred examples of the present invention will be described in order to facilitate understanding of the present invention. It will be apparent to those skilled in the art, however, that the following examples are only illustrative of the present invention and various changes and modifications can be made within the scope and spirit of the present invention, and that such variations and modifications are within the scope of the appended claims.

### Examples and Comparative Examples

### [Example 1]

Sulfur (Sigma Aldrich company) was mixed with carbon nanotubes (CNano company) using a ball mill, and then heat-treated at 155 °C to prepare sulfur-carbon composite (S:CNT=75:25, weight ratio).

88 % by weight of the prepared sulfur-carbon composite as a positive electrode active material, 5.0 % by weight of carbon nanotubes (CNano company) as a conductive material, 6.5 % by weight of poly(acrylic acid) (M_{w}:1,200,000) and 0.5 % by weight of poly(diallyldimethylammonium chloride) (M_{w}:200,000) as a binder were mixed, and water was added to prepare an aqueous slurry composition for the positive electrode.

The positive electrode slurry composition prepared above was coated on a carbon-coated aluminum current collector having a thickness of 20 *µ*m in a thickness of 140 *µ*m, dried at 50°C for 12 hours, and pressed with a roll press to prepare a positive electrode.

### [Example 2]

A positive electrode was manufactured by performing the same procedure as in Example 1, except that when preparing the slurry composition for the positive electrode, the contents of the binders, poly(acrylic acid) and poly(diallyldimethylammonium chloride) were changed from 6.5 % by weight and 0.5 % by weight to 6.0 % by weight and 1.0 % by weight, respectively.

### [Example 3]

A positive electrode was manufactured by performing the same procedure as in Example 1, except that when preparing the slurry composition for the positive electrode, the contents of the binders, poly(acrylic acid) and poly(diallyldimethylammonium chloride) were changed from 6.5 % by weight and 0.5 % by weight to 5.5 % by weight and 1.5 % by weight, respectively.

### [Example 4]

A positive electrode was manufactured by performing the same procedure as in Example 1 except that the current collector was changed to a copper foil of the same thickness.

### [Example 5]

A positive electrode was manufactured by performing the same procedure as in Example 1, except that when preparing the slurry composition for the positive electrode, the contents of the binders, poly(acrylic acid) and poly(diallyldimethylammonium chloride) were changed from 6.5 % by weight and 0.5 % by weight to 6.0 % by weight and 1.0 % by weight, respectively, and the current collector was changed to a copper foil of the same thickness.

### [Example 6]

A positive electrode was manufactured by performing the same procedure as in Example 1, except that when preparing the slurry composition for the positive electrode, the contents of the binders, poly(acrylic acid) and poly(diallyldimethylammonium chloride) were changed from 6.5 % by weight and 0.5 % by weight to 5.5 % by weight and 1.5 % by weight, respectively, and the current collector was changed to a copper foil of the same thickness.

### [Example 7]

A positive electrode was manufactured by performing the same procedure as in Example 1, except that when preparing the slurry composition for the positive electrode, 6.5 % by weight of poly(acrylic acid) (M_{w}: 1, 200, 000) and 0.5 % by weight of poly(3,4-ethylenedioxythiophene): poly(styrenesulfonate) (CLEVIOS PH1000) instead of 6.5 % by weight of poly(acrylic acid) and 0.5 % by weight of poly (diallyldimethylammonium chloride) were used as a binder, and the current collector was changed to an aluminum foil of the same thickness.

### [Example 8]

A positive electrode was manufactured by performing the same procedure as in Example 1, except that when preparing the slurry composition for the positive electrode, 6.0 % by weight of poly(acrylic acid) (M_{w}:1,200,000) and 1.0 % by weight of poly(3,4-ethylenedioxythiophene): poly(styrenesulfonate) (CLEVIOS PH1000) instead of 6.5 % by weight of poly(acrylic acid) and 0.5 % by weight of poly(diallyldimethylammonium chloride) were used as a binder, and the current collector was changed to an aluminum foil of the same thickness.

### [Example 9]

A positive electrode was manufactured by performing the same procedure as in Example 1, except that when preparing the slurry composition for the positive electrode, 5.5 % by weight of poly(acrylic acid) (M_{w}:1,200,000) and 1.5 % by weight of poly(3,4-ethylenedioxythiophene): poly(styrenesulfonate) (CLEVIOS PH1000) instead of 6.5 % by weight of poly(acrylic acid) and 0.5 % by weight of poly(diallyldimethylammonium chloride) were used as a binder, and the current collector was changed to an aluminum foil of the same thickness.

### [Example 10]

A positive electrode was manufactured by performing the same procedure as in Example 1, except that when preparing the slurry composition for the positive electrode, 6.0 % by weight of poly(acrylic acid) (M_{w}: 1,200, 000) and 1.0 % by weight of poly[(2-ethyldimethylammonioethyl methacrylate ethyl sulfate) -co-(1-vinylpyrrolidone)] (M_{w}:1, 000, 000) instead of 6.5 % by weight of poly(acrylic acid) and 0.5 % by weight of poly(diallyldimethylammonium chloride) were used as a binder, and the current collector was changed to an aluminum foil of the same thickness.

### [Example 11]

A positive electrode was manufactured by performing the same procedure as in Example 1, except that when preparing the slurry composition for the positive electrode, 6.0 % by weight of poly(acrylic acid) (M_{w}:1,200,000) and 1.0 % by weight of poly(ethylene imine) (M_{w}:250,000) instead of 6.5 % by weight of poly (acrylic acid) and 0.5 % by weight of poly(diallyldimethylammonium chloride) were used as a binder, and the current collector was changed to an aluminum foil of the same thickness.

### [Example 12]

The positive electrode prepared in Example 8 was positioned to face the negative electrode (lithium metal thin film, thickness: 45 *µ*m) , and a polyethylene separator (thickness: 20 *µ*m , porosity: 70 %) was interposed therebetween, and then, 100 *µ*l of electrolyte prepared by dissolving 1.0 M concentration of LiTFSI and 3.0 % by weight of lithium nitrate (LiNO₃) in a mixed solvent (DOL:DME=1:1, volume ratio) of 1,3-dioxolane (DOL) and dimethoxyethane (DME) was injected to manufacture a lithium secondary battery.

### [Example 13]

A lithium secondary battery was manufactured in the same manner as in Example 12, except that the positive electrode prepared in Example 10 was used.

### [Example 14]

A lithium secondary battery was manufactured in the same manner as in Example 12, except that the positive electrode prepared in Example 11 was used.

### [Comparative Example 1]

A positive electrode was manufactured by performing the same procedure as in Example 1, except that when preparing the slurry composition for the positive electrode, the content of poly(acrylic acid) was changed by 7 % by weight, without using poly(diallyldimethylammonium chloride) as a binder.

### [Comparative Example 2]

A positive electrode was manufactured by performing the same procedure as in Example 1, except that when preparing the slurry composition for the positive electrode, the content of poly(acrylic acid) was changed by 7 % by weight, without using poly(diallyldimethylammonium chloride) as a binder, and the current collector was changed to a copper foil of the same thickness.

### [Comparative Example 3]

A positive electrode was manufactured by performing the same procedure as in Example 1, except that when preparing the slurry composition for the positive electrode, the content of poly(acrylic acid) was changed by 7 % by weight, without using poly(diallyldimethylammonium chloride) as a binder, and the current collector was changed to an aluminum foil of the same thickness.

### [Comparative Example 4]

A positive electrode was manufactured by performing the same procedure as in Example 1, except that when preparing the slurry composition for the positive electrode, 6.5 % by weight of poly(acrylic acid) and 0.5 % by weight of triethylenetetramine (C₆H₁₈N₄) instead of 6.5 % by weight of poly(acrylic acid) and 0.5 % by weight of poly(diallyldimethylammonium chloride) were used as a binder, and the current collector was changed to an aluminum foil of the same thickness.

### [Comparative Example 5]

A lithium secondary battery was manufactured in the same manner as in Example 12, except that the positive electrode prepared in Comparative Example 3 was used.

### Experimental Example 1. Evaluation of positive electrode bonding force

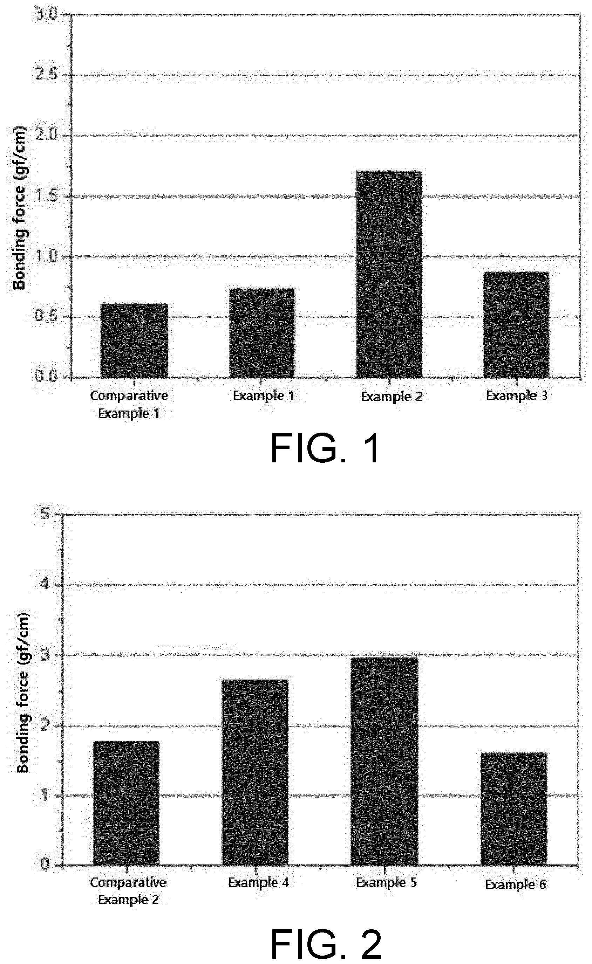

The positive electrodes prepared in Examples 1 to 11 and Comparative Examples 1 to 4 were dried at 50 °C for 2 hours, and then cut into a size of 15 cm × 2 cm, followed by adhering the positive electrode side to the slide glass with double-sided tape to manufacture a sample for peel test through lamination. Subsequently, the sample for the peel test was loaded onto a universal testing machine (LS1, a product from AMETEK company) capable of measuring the bonding force, and the peeling resistance (gf/cm) applied by performing a 90° peel test was measured, and the adhesive properties of the positive electrodes were calculated, and the results were shown in FIGs. 1 to 5.

### <Analysis conditions>

- Sample width: 20 mm
- Propagation speed: 300 mm/min
- Valid calculation interval of data: 10 ~ 40 mm Through FIGs. 1 to 5, it can be seen that the positive electrodes of Examples comprising the binder produced by mixing a small amount of cationic polymer with the polymer including the carboxylate group have excellent positive electrode bonding force, as compared to the positive electrode of Comparative Example that does not contain cationic polymer or contains positively charged single molecules.

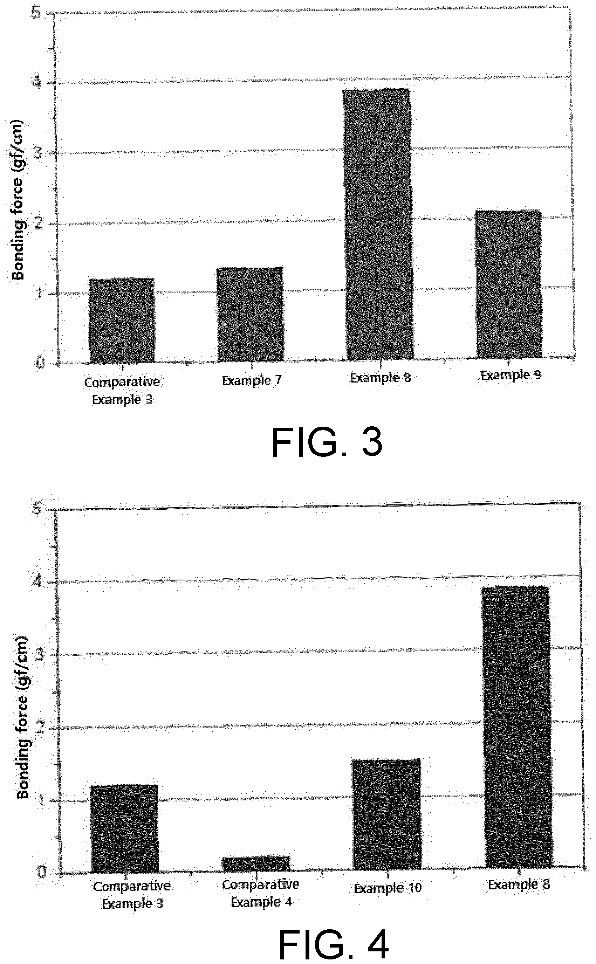

Specifically, FIGs. 1 to 3 are results obtained by using different current collectors, respectively. FIG. 1 shows a case of using a carbon coated aluminum foil as a current collector, FIG. 2 shows a case of using a copper foil and FIG. 3 shows a case of using an aluminum foil. From FIGs. 1 to 3, it can be seen that regardless of the material of the current collector, in the cases of Examples 1 to 9 in which the polymer including the carboxylate group and cationic polymer are used together as a binder, the bonding force is higher than that of the positive electrodes of Comparative Examples 1 to 3 that do not contain cationic polymer, and the bonding force increases with the proportion of cationic polymer, but that from the results of Examples 3, 6, and 9, if the cationic polymer is added in a certain amount or more, the bonding force is rather reduced.

In addition, FIG.4 shows a comparison of the bonding force of positive electrodes according to Comparative Example 3 without using the cationic polymer, Comparative Example 4 using positively charged single molecules instead of cationic polymer and Examples 8 and 10 comprising cationic polymers of the same content but different types, in case of using an aluminum foil as current collector. It can be seen from the results of Comparative Example 4, that in the case of the positively charged single molecule, there was no effect of improving the adhesion properties, and from the results of Example 8 and 10 that when the content of the cationic polymer is the same, the effect of improving the adhesion properties of poly(3,4-ethylenedioxythiophene):poly(styrenesulfonate) was excellent.

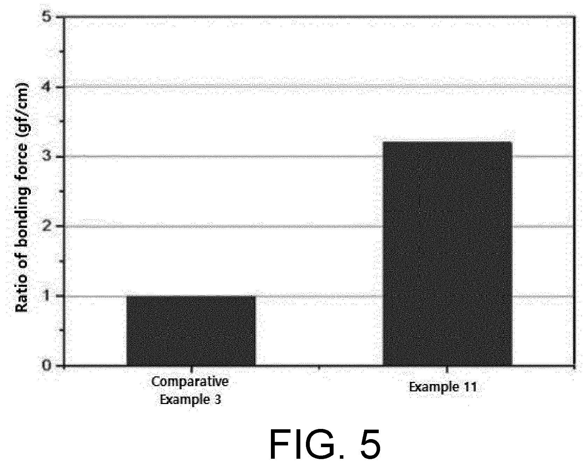

In addition, FIG. 5 shows a relative value of the positive electrode bonding force of Example 11, assuming that the positive electrode bonding force of Comparative Example 3 without using a cationic polymer is 1. It can be seen that the adhesion properties of the positive electrode which comprises the polymer including the carboxylate group and the cationic polymer together are excellent.

### Experimental Example 2. Evaluation of the performance of lithium secondary battery

The performance of the lithium secondary batteries prepared in Examples 12 to 14 and Comparative Example 5 were evaluated using a charging/discharging measuring device (LAND CT-2001A, a product from Wuhan company).

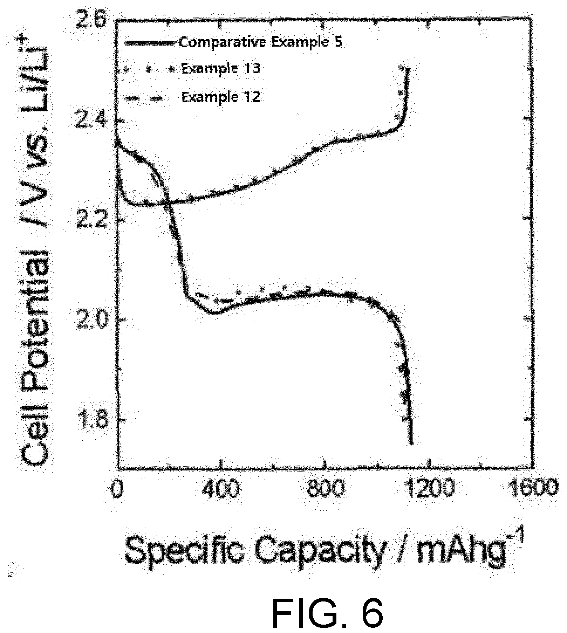

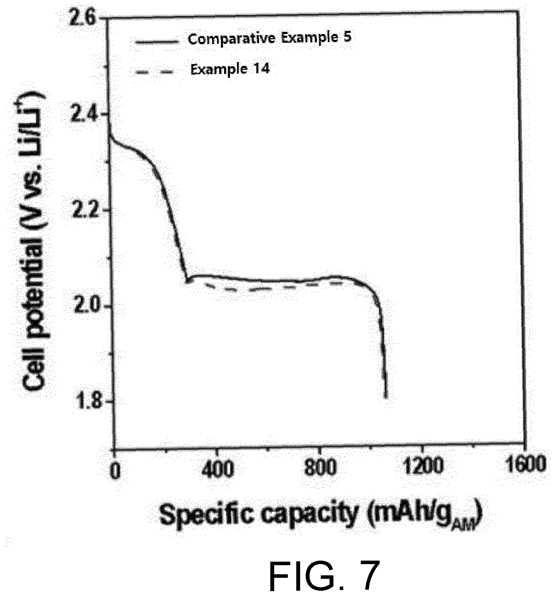

First, the charging/discharging characteristics were measured with a current density of 0.1C (0.55 mA·Cm⁻²) for each lithium secondary battery, and the results were shown in FIGs. 6 and 7.

Referring to FIGs. 6 and 7, it can be seen that the charging/discharging characteristics of the batteries manufactured in Examples and Comparative Examples are the same.

However, it can be seen from FIG. 7 that when using poly(ethylene imine) as a cationic polymer, a phenomenon of voltage drop occurs.

From these results, it can be seen that the batteries which comprise the binder produced by mixing a small amount of cationic polymer, specifically polyquaternium or poly(3,4-ethylenedioxythiophene):poly(styrenesulfonate) with the polymer including the carboxylate group in the positive electrodes according to the present invention have improved electrode bonding force without deteriorating the charging/discharging characteristics of the batteries as compared with batteries that do not contain cationic polymer or contain poly(ethylene imine) as cationic polymer.

## Claims

1. A binder for an electrode of a lithium secondary battery comprising:
a polymer comprising a carboxylate group; and
a cationic polymer,
wherein a content of the cationic polymer is 5 % by weight to 30 % by weight based on a total weight of the binder.

2. The binder for the electrode of the lithium secondary battery according to claim 1, wherein the polymer comprising the carboxylate group comprises at least one selected from the group consisting of poly(acrylic acid), lithium polyacrylate, poly(methacrylic acid), lithium poly(methacrylate), carboxymethyl cellulose, sodium carboxymethyl cellulose, styrene-butadiene rubber/carboxymethyl cellulose, alginic acid, and sodium alginate.

3. The binder for the electrode of the lithium secondary battery according to claim 1, wherein the polymer comprising the carboxylate group has a weight average molecular weight of 50,000 to 5,000,000.

4. The binder for the electrode of the lithium secondary battery according to claim 1, wherein the cationic polymer comprises at least one selected from the group consisting of polyquaternium, poly(allylamine hydrochloride), poly(ethylene imine), poly(4-vinylpyridine), poly(3,4-ethylenedioxythiophene):poly(styrenesulfonate), poly(vinylamine hydrochloride), poly(2-(dimethylamino)ethyl methacrylate)), and poly(amido amine).

5. The binder for the electrode of the lithium secondary battery according to claim 1, wherein the cationic polymer has a weight average molecular weight of 3,000 to 1,000,000.

6. The binder for the electrode of the lithium secondary battery according to claim 1, wherein the content of the cationic polymer is 5 % by weight to 25 % by weight based on the total weight of the binder.

7. The binder for the electrode of the lithium secondary battery according to claim 1, wherein the polymer comprising the carboxylate group and the cationic polymer are present in a weight ratio of 70:30 to 95:5.

8. The binder for the electrode of the lithium secondary battery according to claim 1, wherein the electrode is a positive electrode.

9. The binder for the electrode of the lithium secondary battery according to claim 8, wherein the electrode is a positive electrode which comprises sulfur as a positive electrode active material and a carbon material as a conductive material.

10. A positive electrode for a lithium secondary battery comprising a positive electrode active material, a conductive material, and the binder for the electrode of the lithium secondary battery according to claim 1.

11. The positive electrode for the lithium secondary battery according to claim 10, wherein the positive electrode active material comprises at least one selected from the group consisting of inorganic sulfur (S₈), Li₂Sₙ(n≥1), disulfide compounds, organosulfur compounds, and carbon-sulfur polymers ((C₂Sₓ)ₙ, x=2.5 to 50, n≥2) .

12. The positive electrode for the lithium secondary battery according to claim 11, wherein the positive electrode active material is present in the form of a sulfur-carbon composite.

13. The positive electrode for the lithium secondary battery according to claim 10, wherein a content of the binder is 2 % by weight to 10 % by weight based on a total weight of a base solid content included in the positive electrode for the lithium secondary battery.

14. The positive electrode for the lithium secondary battery according to claim 10, wherein the binder comprises a polymer including a carboxylate group and a cationic polymer, and the content of the cationic polymer is 0.1 % by weight to 3 % by weight based on a total weight of the base solid content included in the positive electrode for the lithium secondary battery.

15. A lithium secondary battery comprising the positive electrode for the lithium secondary battery according to claim 10, a negative electrode, a separator interposed between them, and an electrolyte.
